# EUROPEAN PATENT APPLICATION

(11) **EP 2 698 708 A1**
(43) Date of publication of application: **19.02.2014**
(21) Application number: 13173483.2
(22) Date of filing: 25.06.2013
(51) Int. Cl.: G06F 9/44, G06F 3/0488

(54) **Method for providing user interface having multi-tasking function, mobile communication device, and computer readable recording medium for providing the same**

(30) Priority: 17.08.2012 KR 20120089920
(71) Applicant: Pantech Co., Ltd., Seoul 121-792 (KR)
(72) Inventor: Shin, Hyang Eim, 121-792 Seoul (KR); Park, Ye Seul, 121-792 Seoul (KR); Jeong, Tong, 121-792 Seoul (KR)
(74) Representative: Jordan, Volker Otto Wilhelm

(57) **Abstract**

A method for providing a user interface, the method includes displaying a foreground application window on a touch screen of a mobile communication device, detecting an input pattern for displaying a multi-tasking bar, displaying the multi-tasking bar on the touch screen in response to detecting the input pattern for displaying the multi-tasking bar, the multi-tasking bar configured to divide the touch screen into at least two areas, and resizing the foreground application window within a first area of the at least two areas.

## Description

### CROSS-REFERENCE TO RELATED APPLICATIONS

This application claims priority from and the benefit under 35 U.S.C.§119(a) of Korean Patent Application No. 10-2012-0089920, filed on August 17, 2012, which is herein incorporated by reference as if fully set forth herein.

### BACKGROUND

FIELD

The present disclosure relates to a method for providing a user interface, a mobile terminal, and a computer readable medium, and more particularly, to a mobile terminal providing various multi-tasking functions, a computer readable medium, and a method of providing a user interface.

DISCUSSION OF THE BACKGROUND

In a general mobile terminal, only one application program module is executed and displayed on one screen and is provided for a user, but a recent mobile terminal provides a multi-tasking function of displaying two or more executed works on one screen.

For example, if a specific user input, such as pinch-in, is received while a specific application is executed on the screen, the screen is divided into two half screens and the screen capable of multi-tasking is configured.

However, the multi-tasking function is designed such that the multi-tasking function is possible, for example, only when a function, such as Short Message Service (SMS), memo, Social Network Service (SNS), Digital Media Broadcasting (DMB), gallery, and moving image play, is executed. Accordingly, as a mobile apparatus, such as a tablet PC and a smart phone, gradually uses a high performance CPU and a large size display, there is a problem that a demand of users who want to simultaneously use various functions is not satisfied.

In addition, when a multi-tasking operation, such as selecting an application to be executed on the background, is performed, the above user interface is not configured in an efficient form, which may be very uncomfortable for the users.

### SUMMARY

Exemplary embodiments of the present invention provide an apparatus and method for providing a user interface for managing multi-tasking operations.

Additional features of the invention will be set forth in the description which follows, and in part will be apparent from the description, or may be learned by practice of the invention.

Exemplary embodiments of the present invention provide a method for providing a user interface, the method including: displaying a foreground application window on a touch screen of a mobile communication device; detecting, using a processor, an input pattern for displaying a multi-tasking bar; displaying the multi-tasking bar on the touch screen in response to detecting the input pattern for displaying the multi-tasking bar, the multi-tasking bar configured to divide the touch screen into at least two areas; and resizing the foreground application window within a first area of the at least two areas.

Exemplary embodiments of the present invention provide a mobile communication device to provide a user interface, including: a processor configured to recognize an input pattern for displaying a multi-tasking bar from a touch input; and a touch screen display to receive the touch input, to display the multi-tasking bar on a touch screen of the mobile communication device in response to recognizing the input pattern for displaying the multi-tasking bar, the multi-tasking bar configured to divide the touch screen into at least two areas, and to display a foreground application window on a first area of the at least two areas.

Exemplary embodiments of the present invention provide a non-transitory computer readable storage medium storing one or more programs for instructing a computer, when executed by a processor, to perform: displaying a foreground application window on a touch screen of a mobile communication device; detecting an input pattern for displaying a multi-tasking bar; displaying the multi-tasking bar on the touch screen in response to detecting the input pattern for displaying the multi-tasking bar, the multi-tasking bar configured to divide the touch screen into at least two areas; and resizing the first foreground application window within a first area of the at least two areas.

It is to be understood that both forgoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating a mobile terminal according to an exemplary embodiment of the present invention.

FIG. 2 is a diagram illustrating a user interface for a multi-tasking according to an exemplary embodiment of the present invention.

FIG. 3 is a flowchart illustrating a multi-tasking bar display and screen division operation according to an exemplary embodiment of the present invention.

FIG. 4A, FIG. 4B, FIG. 4C, and FIG. 4D are schematic diagrams illustrating a user interface for the flowchart shown in FIG. 3 according to an exemplary embodiment of the present invention.

FIG. 5A is a schematic diagram illustrating a user interface for the flowchart shown in FIG. 3 according to an exemplary embodiment of the present invention.

FIG. 5B is a schematic diagram illustrating a screen of a mobile terminal divided into three regions according to an exemplary embodiment of the present invention.

FIG. 6 is a flowchart illustrating an operation of executing a background application on the foreground according to an exemplary embodiment of the present invention.

FIG. 7A, FIG. 7B, and FIG. 7C are schematic diagrams illustrating a user interface for the flowchart shown in FIG. 6 according to an exemplary embodiment of the present invention.

FIG. 8A, FIG. 8B, and FIG. 8C are schematic diagrams of a user interface illustrating an operation related to a bookmark icon according to an exemplary embodiment of the present disclosure;

FIG. 9 is a flowchart illustrating an operation of activating an inactivated application according to an exemplary embodiment of the present invention.

FIG. 10A and FIG. 10B are schematic diagrams illustrating a user interface for the flowchart shown in FIG. 9 according to an exemplary embodiment of the present invention.

FIG. 11A, FIG. 11B, and FIG. 11C are schematic diagrams of a user interface illustrating an operation of hiding or displaying a multi-tasking bar according to an exemplary embodiment of the present invention.

FIG. 12A, FIG. 12B, FIG. 12C, FIG. 12D, and FIG. 12E are schematic diagrams of a user interface illustrating an operation of displaying one of foreground applications on the full screen according to an exemplary embodiment of the present invention.

FIG. 13 is a flowchart illustrating a screen division ratio adjusting operation according to an exemplary embodiment of the present invention.

FIG. 14A and FIG. 14B are schematic diagrams illustrating a user interface for the flowchart shown in FIG. 13 according to an exemplary embodiment of the present invention.

FIG. 15A and FIG. 15B are diagrams illustrating a user interface for displaying a multi-tasking bar according to an exemplary embodiment of the present invention.

### DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity, illustration, and convenience. Hereinafter, a method of providing a user interface, a mobile terminal, and a computer readable medium will be described in more detail with reference to the drawings.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

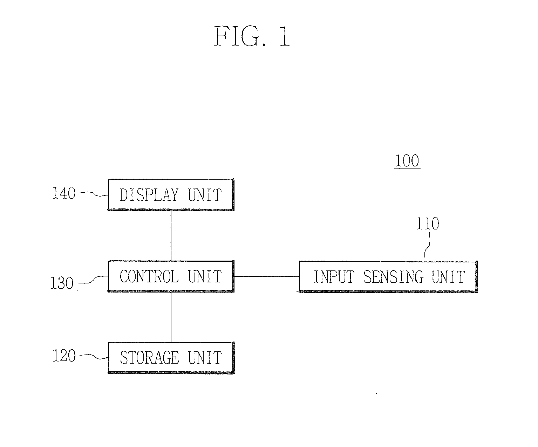

A configuration of a mobile terminal 100 will be described with reference to FIG. 1.

FIG. 1 is a block diagram illustrating a mobile terminal according to an exemplary embodiment of the present invention. Referring to FIG. 1, the mobile terminal 100 includes an input sensing unit 110, a storage unit 120, a control unit 130, and a display unit 140. The input sensing unit 110, the storage unit 120, the control unit 130, and the display unit 140 may be implemented by one or more hardware and/or software components. One or more software modules for implementing various units, e.g., the input sensing unit 110, the control unit 130, and the display unit 140, may be stored in a storage device of the mobile terminal and executed by one or more processors.

The input sensing unit 110 may sense a user input for multi-tasking or other commands. If the mobile terminal 100 supports a touch input mode, the input sensing unit 110 may sense a touch input, e.g., a part of a body of a user touched onto the screen of the mobile terminal 100, a touch pen, or the like, as an input. In addition, if the mobile terminal 100 supports an ultrasonic wave recognition mode, the input sensing unit 110 may sense an input by receiving an ultrasonic wave signal transmitted through an ultrasonic wave transmitter. In addition, the input sensing unit 110 may sense various inputs, such as an input received on a keypad, a voice input, etc., and other input methods available for a person skilled in the art may be used.

The storage unit 120 may store the user input sensed through the input sensing unit 110, data compared with the user input, a control value for the user to perform a desired function, and the like.

The control unit 130 may determine whether to perform a specific operation or function according to the user unit, provide the multi-tasking bar having various interfaces, and set an order of executing a specific function or application. For example, if the input for a multi-tasking bar display is sensed, the control unit 130 may control the multi-tasking bar to be displayed on the display unit 140. In addition, the control unit 130 may perform various commands and determinations for the user to use the mobile terminal 100.

The display unit 140 may display the user interfaces and functions instructed by the control unit 130 on the screen. The display unit 140 may display the multi-tasking bar and the execution screen of the application, and may display a predetermined pop-up window for inducing the user input.

The "multi-tasking bar" as used according to embodiments of the present invention comprises at least one elongate, preferably bar-like graphical object which may divide the display into at least two areas when displayed on a display and may comprise one or plural icons and may display other relevant information such as device state information, etc.

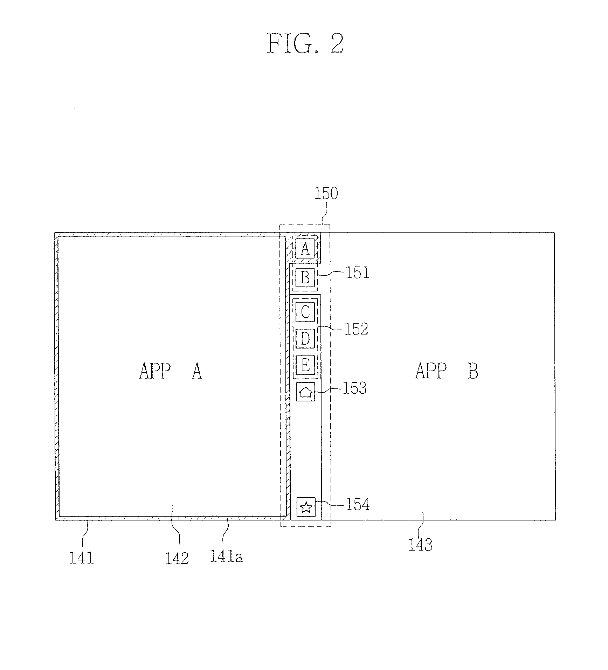

Hereinafter, a user interface in which the multi-tasking bar is displayed will be described with reference to FIG. 2.

FIG. 2 is a diagram illustrating a user interface for a multi-tasking according to an exemplary embodiment of the present invention. Herein, before describing a configuration of the user interface, definitions of terms are described. "Foreground" may refer to an execution area displayed on the screen of a terminal, and "background" may refer to an execution area which is not displayed on the screen of the terminal. The execution area may include an execution area for running an application in which an application or a webpage, etc. may be executed. In the foreground, at least part of the execution is visible to the user by displaying the execution window on the screen of the terminal. In the background, the execution may be invisible to the user since the execution window is not displayed on the screen of the terminal. In addition, "active" may refer to an application execution state where the application is ready for executing an operation in response to a user input, and "inactive" may refer to an application execution state in which the application is not ready for executing an operation in response to the user input and is waiting for an input for activation. For example, in FIG. 2, the applications A and B are executed on the foreground because the execution windows of the applications A and B are displayed on the display screen. If the application B is in the inactive state, the application B may receive and process a user command corresponding to a user input after the inactive state is changed to the active state. Accordingly, the user may not be able to manipulate the inactive application B by a direct input before changing the inactive state into the active state. However, aspects are not limited as such. For example, in the inactive state, an application may change the inactive state into the active state and may execute an operation in response to a user input. Further, two or more application windows may be displayed on the display screen such that a foreground application window does not completely cover another foreground/background application.

The user interface may be displayed on the entire or partial screen 141 of the mobile terminal 100, and may be displayed to divide the screen into at least two areas.

The user interface may be divided into an active area 142, and an inactive area 143. Further, is the user interface may include a multi-tasking bar 150.

The multi-tasking bar 150 may be arranged in a direction of connecting the upper end and the lower end of the screen 141 of the mobile terminal when the mobile terminal 100 is oriented in landscape orientation as illustrated in FIG. 2. In this case, a direction of the multi-tasking bar 150 may be perpendicular to a long side of the screen 141. However, this is an example, and a position, a shape, etc. of the multi-tasking bar may vary and/or be set or determined by a user. For example, the multi-tasking bar may be parallel to the long side of the screen or may be positioned in a diagonal direction, may have an oval shape or various polygonal shapes other than the bar shape, and/or may not extend completely across the screen 141.

The multi-tasking bar 150 may display a plurality of icons. The plurality of icons may include an icon of an application executed on the foreground and/or background, a home shortcut icon 153, and a bookmark icon 154. The plurality of icons may be arranged in series or in one or more rows in one direction. The multi-tasking bar 150 displays such icons to provide information of the application executed for the user and to embody various functions using the icons.

The multi-tasking bar 150 displays the icon of the application executed on the foreground in the first task area 151, and displays the icon of the application executed on the background in the second task area 152. The first and second task areas 151 and 152 may be arranged in series or in one or more rows in one direction, and the first task area 151 may be disposed at the upper or top end with respect to a viewing direction, and the second task area 152 may be disposed below the first task area 151 in the multi-tasking bar 150 with respect to a viewing direction.

The first task area 151 displays the icon of the activated application and the icon of the inactivated application in the foreground. In this case, the icon of the activated application may be disposed at the upper or the top end of the multi-tasking bar 150 with respect to a viewing direction, and the icon of the inactivated application may be disposed below the icon of the activated application in the multi-tasking bar 150 with respect to a viewing direction. In addition, the icons of the activated application and the inactivated application may be displayed to be different in brightness, chroma, definition, and the like, and may be displayed such that the user can easily recognize the activation and inactivation states. Each icon may be displayed in a shape connected to an area where the corresponding application is executed as shown in FIG. 2.

All the applications displayed in the second task area 152 may be in the background state, and thus may be arranged without discrimination. Specifically, the icons displayed in the second task area 152 may be arranged in the order of the most recent execution by the user. In addition, in the second task area 152, 9 to 10 icons may be displayed, but are not necessarily limited as such. Maximum number of icons displayed in the second task area 152 may be preset or customized by a user setting.

The active area 142 may be displayed to be surrounded by a frame 141a having a predetermined color. In this case, the icon of the activated application may be displayed to be surrounded by the frame 141a. The frame 141a indicates the position of the active area 142. Accordingly, for example, after the user does not work in the mobile terminal, even when the user views the screen 141 of the mobile terminal again after some time, it may be possible for the user to recognize that the application A is activated. In addition, the areas 142 and 143 may be distinguished by colors such as brightness, chroma, and definition between the active area 142 and the inactive area 143.

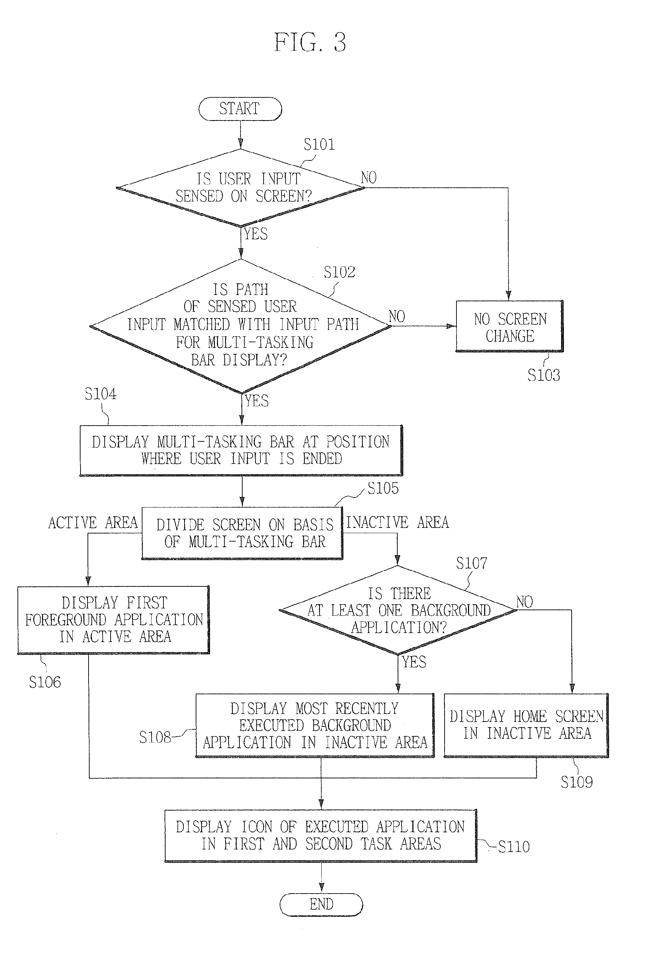

Hereinafter, in the method of providing the user interface, a multi-tasking bar displaying and screen dividing operation will be described with reference to FIG. 3 to FIG. 5B.

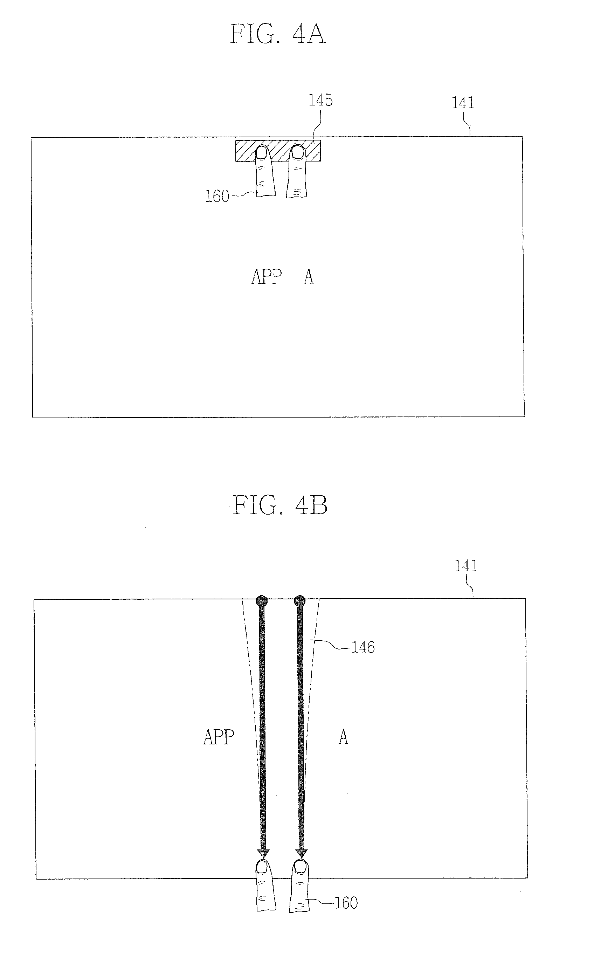

FIG. 3 is a flowchart illustrating a multi-tasking bar display and screen division operation according to an exemplary embodiment of the present invention. In operation S101, a user input inputted onto the screen 141 of the mobile terminal 100 is sensed. If the mobile terminal 100 supports the touch input mode, the user input senses whether a touch input is received onto the screen 141. For example, if fingers of the user touch one end of the screen 141, an indicator 145 may be displayed at the touched location of the screen 141 as shown in FIG. 4A. The indicator 145 may have various shapes and forms, and may be displayed by a curve line form, a polygonal form, or other various shapes.

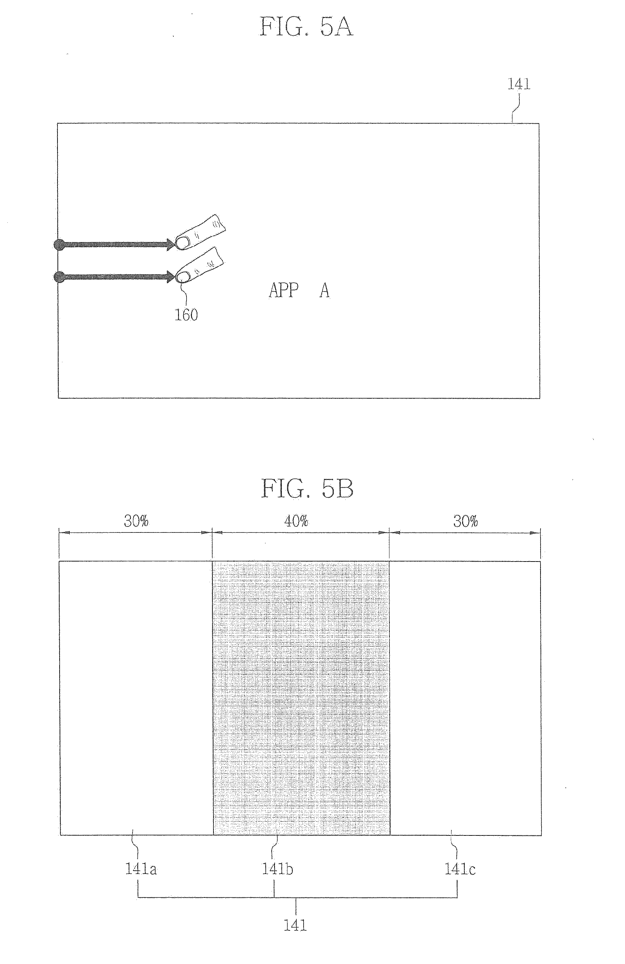

For example, as shown in FIG. 4A, if two fingers 160 of the user touch the upper end of the screen 141, a predetermined rectangular indicator 145 is displayed. Further, the multi-tasking bar may be displayed between two fingers 160 of the user if the two fingers are moved down to the other end of the screen 141 as shown in FIG. 4B ("multi-touch drag input"). That is, the touch locations of the two fingers 160 of the user may determine the display position of the multi-tasking bar 150. In addition, as shown in FIG. 5A, if two fingers 160 of the user touch the left end of the screen 141, the touch may be sensed as a user input, and an indicator may be displayed at the touched locations of the two fingers 160 although not shown in FIG. 5A.

Meanwhile, if the initial input of the user is recognized as an input for the application which is being executed on the screen, it may be difficult to recognize the initial input as an input for displaying the multi-tasking bar. For the recognition of the input for displaying the multi-tasking bar, "preset position" where the initial input of the user starts and "preset pattern" of the initial input may be stored in the storage unit 120. If it is determined that the user input is matched with the preset position and the preset pattern, it may be possible to recognize the user input as the input for multi-tasking bar display. For example, if the initial input moving ("pattern") from the center area ("position") of the screen upper end to the lower end at a predetermined speed is recognized, it may be possible to recognize the user input as the input for displaying the multi-tasking bar. In addition, an input of touching one area ("position") of the screen during a predetermined time may be recognized as the input for displaying the multi-tasking bar. Further, the initial input may be defined as other various input patterns and/or input positions, such as a two-finger touch on an edge of the screen.

Referring back to FIG. 3, it may be determined whether the path of the user input is matched with the input path for displaying the multi-tasking bar in operation S102. The input path for displaying the multi-tasking bar is stored in the storage unit 120 of the mobile terminal 100. The control unit 130 determines whether the input path of the user is matched with the stored input path.

The input path may be a direction from the upper end of the center area to the lower end. For example, the input path may be a path on which two fingers 160 touched on the upper end of the screen 141 are dragged to the lower end of the screen 141 as shown in FIG. 4B. Further, the input path may be continuous, and may be a path reaching the end of the lower end of the screen 141. In addition, the position of the input path is not limited to the example described above, and the path reaching a predetermined area of the lower end of the screen 141 may be set as an input path. In addition, if the speed of the dragging of the user input is equal to or higher than a predetermined level, the predetermined level of speed may be set as a criterion to recognize the speed of the input and to determine the input as an input for displaying the multi-tasking bar, and may be set to recognize the speed of the user input as a partial pattern of the input path. Herein, the indicator 145 may be moved in the direction of the user input together with the movement of the user input. In addition, according to the moving of the indicator 145, a triangular interface 146 connected to the indicator 145 may be displayed. The triangular interface 146 may be displayed in a shape as tearing a page of a book by two fingers 160 of the user. If the indicator 145 has a shape as a zipper, the interface may be displayed in a shape as opening the zipper.

In addition, the input path may be a path from one side end of the screen 141 of the mobile terminal 100 to the center area 141b of the screen 141. For example, the input path may be a path on which two fingers 160 touched on the left end of the screen 141 are dragged to the center area 141b of the screen 141b as shown in FIG. 5A. Referring to FIG. 5B, the screen 141 may be defined by a left area 141a, a center area 141b, and a right area 141c. For example, the left area 141a and the right area 141c may be 20% to 40% of the width of the screen 141, and the center area 141b may be 20% to 60% of the width of the screen 141. Specifically, the left area 141a and the right area 141c may be 30%, and the center area 141b may be 40%.

Referring back to FIG. 3, if it is determined that the input path of the user is not matched with the input path stored in the storage unit 120, the multi-tasking bar is not displayed, and any change may not occur on the screen 141 in operation S103. For example, if the user input starts from the upper end of the screen 141 and does not reach the lower end of the screen 141, the multi-tasking bar may not be displayed. Further, if the user input starts from one side end of the screen 141 as shown in FIG. 5A and ends at the left area 141a or the right area 141c, the multi-tasking bar may not be displayed.

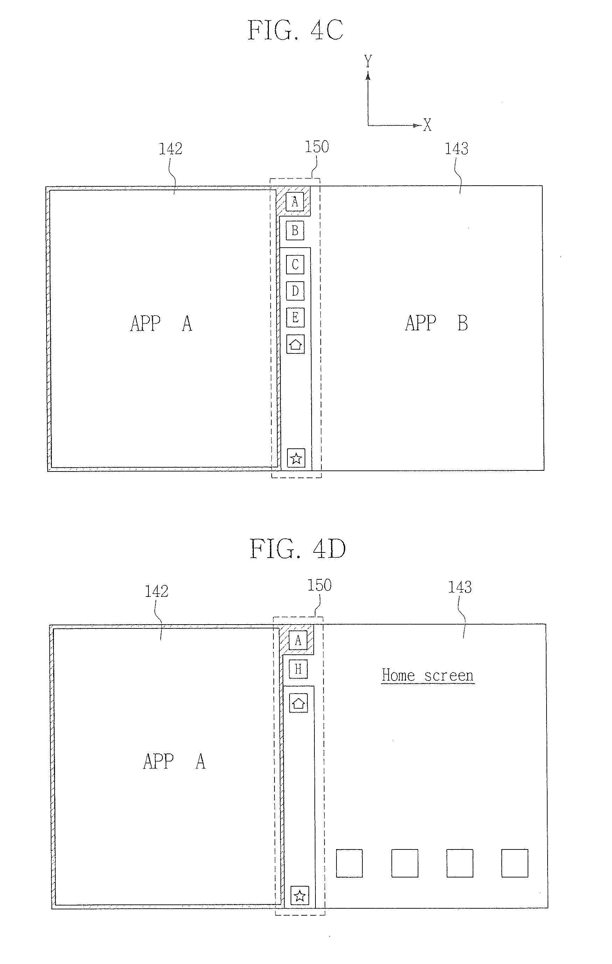

Referring back to FIG. 3, if it is determined that the input path of the user is matched with the input path stored in the storage unit 120, the multi-tasking bar 150 may be displayed at the position where the user input starts or ends in operation S104. For example, in FIG. 4B and FIG. 4C, the start point (or the end point) of the user input, that is, an x-axis coordinate of the start point (or the end point) of the dragging of two fingers 160 is an x-axis coordinate in which the multi-tasking bar 150 is to be displayed, and the multi-tasking bar 150 is displayed in a y-axis direction. In the case of FIG. 5A, if the end point of the user input is in the center area 141b of the screen 141, the x-axis coordinate of the end point is the position where the multi-tasking bar 150 is to be displayed.

However, aspects of the present disclosure are not limited to such examples, and in the example shown in FIG. 4C, it may be displayed to be positioned according to the direction of the dragging of two fingers of the user. In addition, in the example shown in FIG. 4C, if the end point of the user input is sensed in the center area 141b of the screen (see FIG. 5A and FIG. 5B), the multi-tasking bar 150 may be set to be constantly displayed at the center of the screen 141. Referring back to FIG. 3, the screen 141 is divided and displayed into two areas by the multi-tasking bar 150 in operation S105.

The application displayed on the screen immediately before the screen division may be displayed in the active area 142 in operation S106. For example, a foreground application window is displayed on a touch screen display may be resized within the active area 142. The foreground application window may display an execution status of the corresponding foreground application.

In operation S107, to select another application to be displayed in the inactive area 143, it may be determined whether at least one application is executed on the background. If there is at least one application executed on the background, the application executed most recently among the applications executed in the background may be displayed in the inactive area 143 in operation S108. For example, another application window may display an execution status of the most recently executed background application within the inactive area 143. If it is determined that there is no application in the background, the home screen may be displayed in the inactive area 143 in operation S109. Further, the operation S107 may be embodied by various methods, such as setting the home screen 141 to be constantly displayed in the inactive area 143 when the screen division is performed, or setting that the application displayed in the active area 142 is displayed in the inactive area 143 in the same manner.

In operation S110, the icon of the application displayed in the active area 142 and the icon of the application displayed in the inactive 143 may be displayed in the first task area 151, and the icons of the background applications which are not displayed on the foreground may be displayed in the second task area 152 (See FIG. 2).

For example, as shown in FIG. 4C, the application A displayed on the first screen 141 is displayed in the active area 142, and the application B most recently executed on the background is displayed in the inactive area 143. The icons of the applications A and B are displayed in the first task area, and the icons of the applications C, D, and E executed on the background are displayed in the second task area. However, if there is no application executed on the background when the screen division is performed, the home screen may be displayed in the inactive area 143 as shown in FIG. 4D.

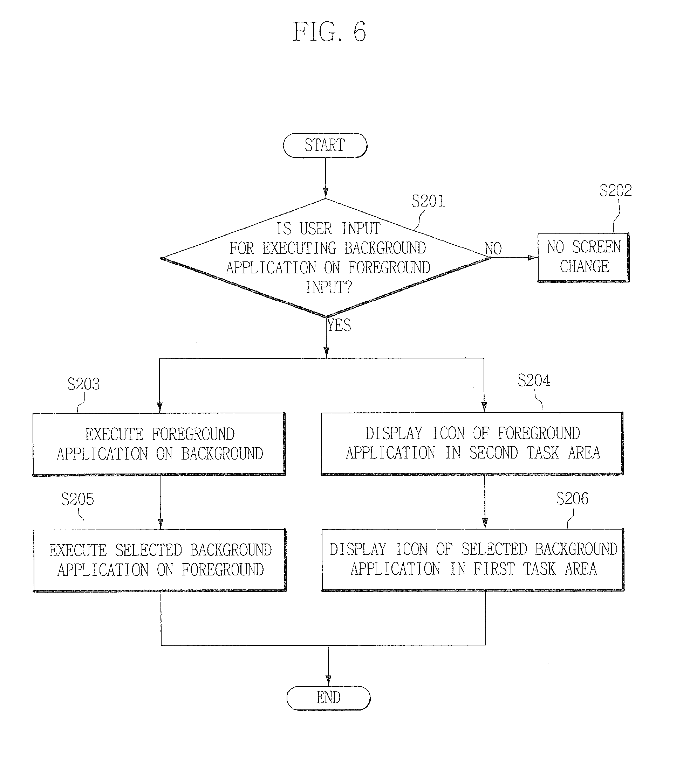

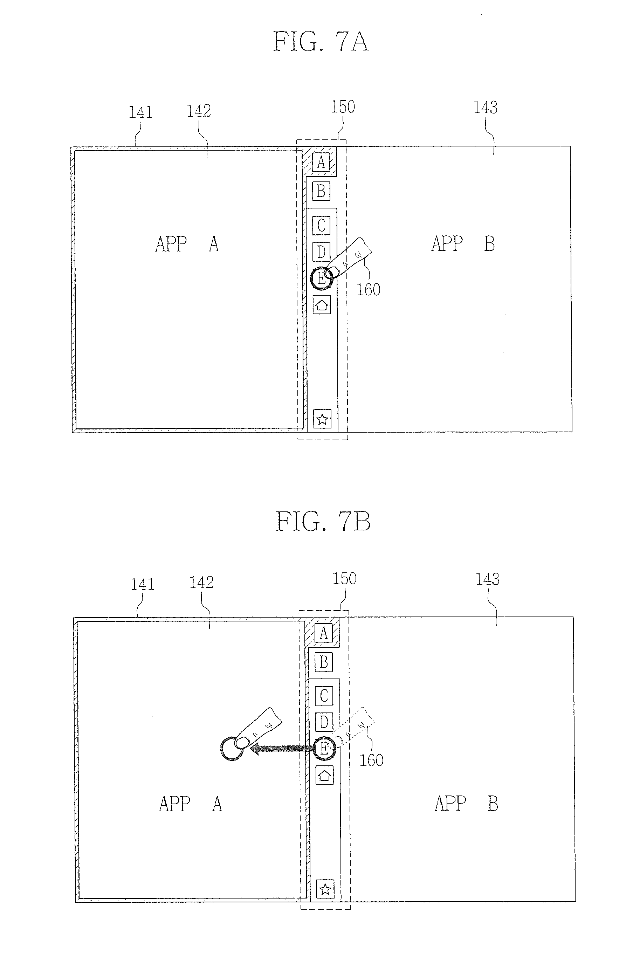

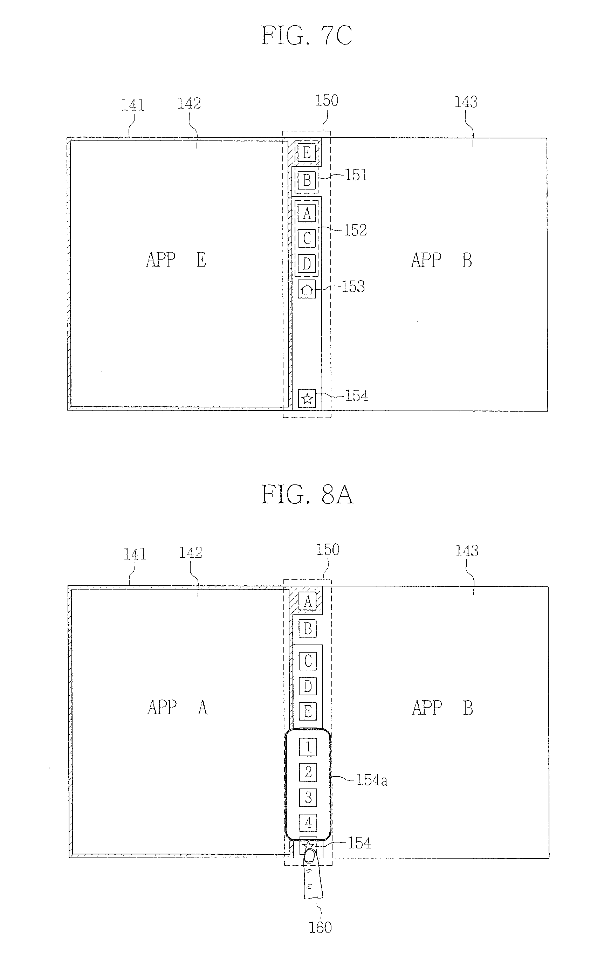

Hereinafter, an operation of activating the background application on the foreground will be described in detail with reference to FIG. 6, FIG. 7A, FIG. 7B, and FIG. 7C.

Referring to FIG. 6, it is determined whether the user input to execute the background application on the foreground is sensed in operation S201.

The user input may be an input of touching the icon in the multi-tasking bar 150 as shown in FIG. 7A, or dragging and dropping the icon of the multi-tasking bar 150 to the desired foreground area, i.e., the active area 142 or the inactive area 143, as shown in FIG. 7B.

Referring back to FIG. 6, if the user input is not sensed, the screen 141 may not be changed in operation S202.

In operation S203, the foreground application is executed on the background. In operation S204, the icon of the application is displayed in the second task area 152 (See FIG. 7C). For example, referring to FIG. 7A and FIG. 7C, if the icon of the background application E is touched, the application A displayed in the active area 142 is executed on the background. Further, the icon of the application A displayed in the first task area 151 is displayed in the second task area 152.

In operation S205, the selected background application is executed on the foreground. In operation S206, the icon of the selected application is displayed in the first task area 151 (See FIG. 7C). For example, in FIG. 7A and FIG. 7C, the application E is displayed in the active area 142, and the icon of the application E is displayed in the first task area 151. A portion of or all the operations S203, S204, S205, and S206 shown in FIG. 6 may be performed simultaneously.

Meanwhile, if the user input is the drag and drop or drag type, and the icon of the background application is dragged to the inactive area 143 (not shown), the application displayed in the inactive area 143 may be executed on the background and the application corresponding to the dragged icon may be displayed in the inactive area 143.

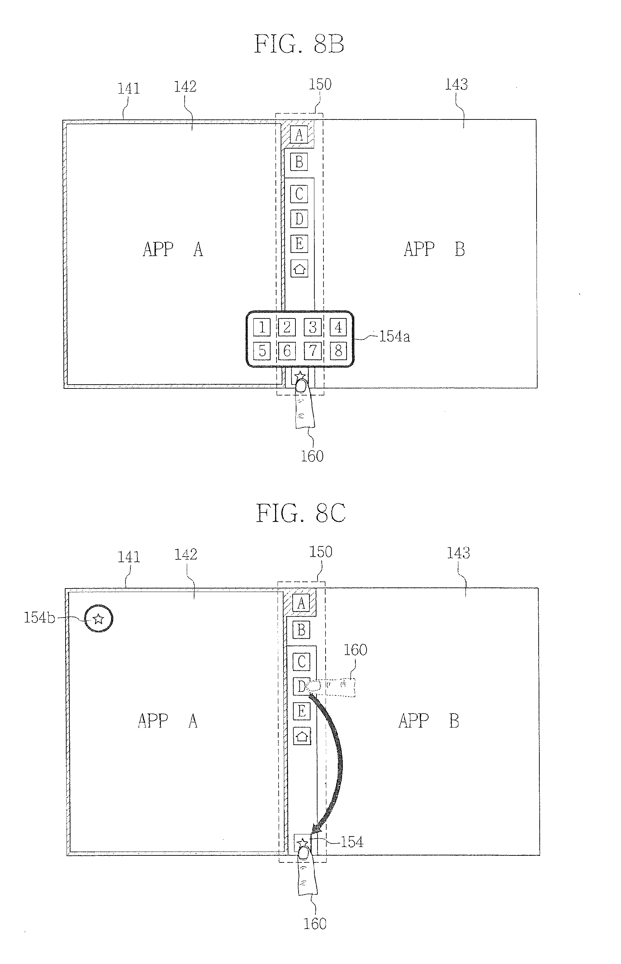

Hereinafter, an operation related to the bookmark icon will be described in detail with reference to FIG. 8A, FIG. 8B, and FIG. 8C.

First, the operation of activating the bookmark menu 154a will be described. The bookmark icon 154 is an icon for displaying the bookmark menu 154a in which favorite applications which the user has registered in the bookmark menu 154a. The bookmark menu 154a may also be activated by a predetermined user input, and the user input may be a form of touching the bookmark icon 154 as shown in FIG. 8A and FIG. 8B.

The activated bookmark menu 154a may have various interfaces. The bookmark menu 154a may be a shape of arranging the icons in series in one direction as shown in FIG. 8A. In this case, it is disposed to overlap with the multi-tasking bar 150, and may be a shape which does not substantially overlap with the inactive area 143 and/or the active area 142. In addition, the bookmark menu 154a may be a shape of arranging the icons in the checkerboard shape in one direction as shown in FIG. 8B, and such a shape may have an advantage of displaying more icons than the shape shown in FIG. 8B.

The operation of inactivating the bookmark menu 154a may be performed by retouching the bookmark icon 154 in a state where the bookmark menu 154a is activated (See FIG. 8B).

Further, the operation of registering the selected application in the bookmark menu 154a may be performed in a manner shown in FIG. 8C. That is, it may be possible to register, in the bookmark menu 154a, the application activated by touching the bookmark registering icon 154b displayed in the active area 142, or it may be possible to register, in the bookmark menu 154a, an application, e.g., an application D of which icon 160 is displayed in the multi-tasking bar 150, by dragging and dropping the corresponding icon displayed in the multi-tasking bar 150 to the bookmark icon 154.

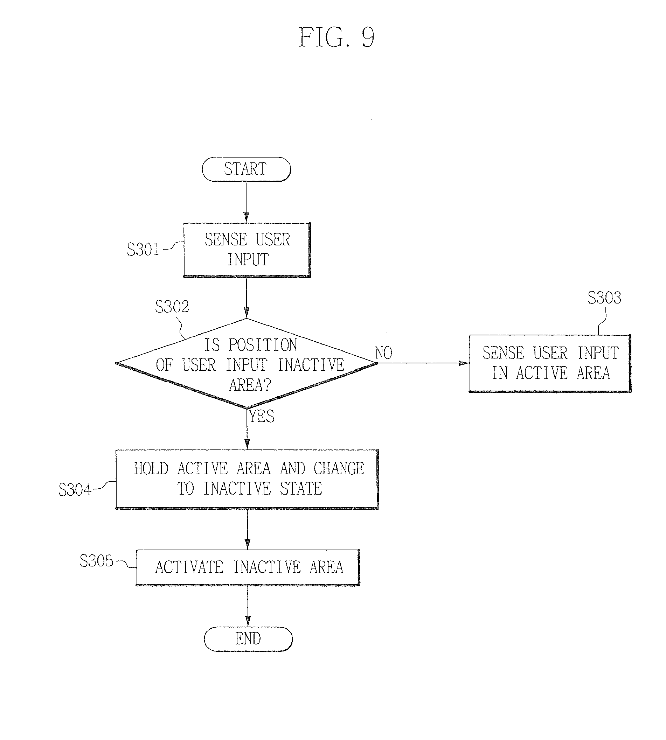

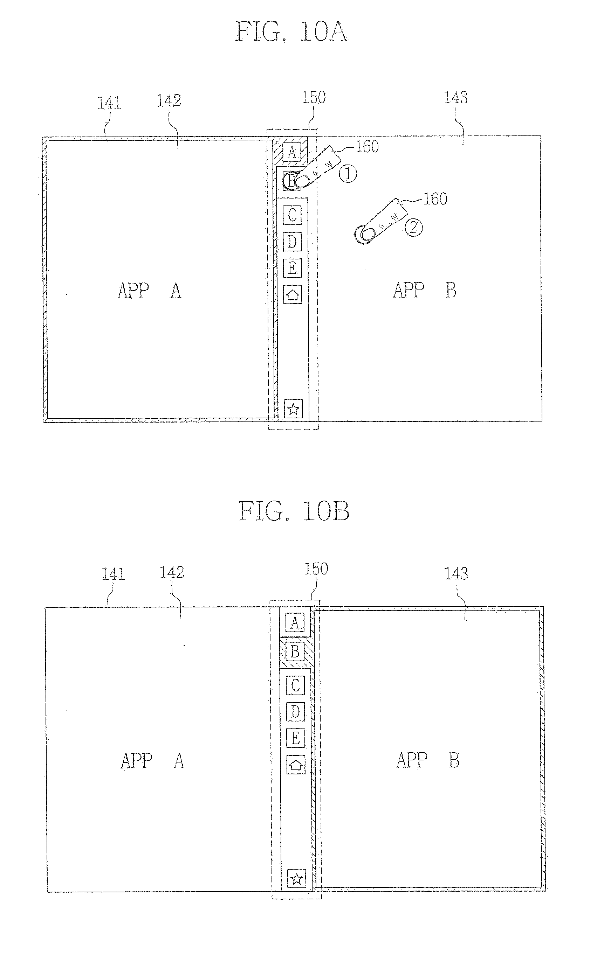

Hereinafter, an operation of activating the application of the inactive area will be described in detail with respect to FIG. 9, FIG. 10A, and FIG. 10B.

Referring to FIG. 9, the user input for activating the application of the inactive area 143 is sensed in operation S310. The user input may be a touch input (1) of touching the icon of the multi-tasking bar 150 or a touch input (2) of touching one area of the screen 141 as shown in FIG. 10A.

In operation S302, it may be determined whether the position of the touched user input corresponds to the inactive area 143. If the position of the user input corresponds to the active area 142, the user input is sensed, and an application command corresponding to the touch input may be performed in operation S303.

If the position of the user input corresponds to the inactive area 143 or the icon of the inactivated application B as shown in FIG. 10A, the active area 142 is changed into an inactive area 142 (See FIG. 10B), and the activated application is changed to the inactive state in operation S304 of FIG. 9. The inactive area 143 is activated in operation S305 (See FIG. 10B).

In this case, the active area 142 may remain in a state of displaying the last execution screen of the previously activated application if the state of the active area 142 is changed into an inactive state. The active area 142 may also remain in a state of displaying the screen darker in the inactive state than the active state of activating illumination intensity and continuously providing information updated with the lapse of time. For example, in FIG. 10B, the area where the application A is displayed is the inactive area 142, which is changed from the active area 142 of FIG. 10A to the inactive area 142 of FIG. 10B). Accordingly, if the application B is activated, the last execution screen of the application A is captured, and the continuously captured screens may be displayed. In FIG. 10A, the inactive area 143 may be displayed with lower illumination intensity than the active area 142, and the update information of the application A may be continuously displayed with the lapse of time.

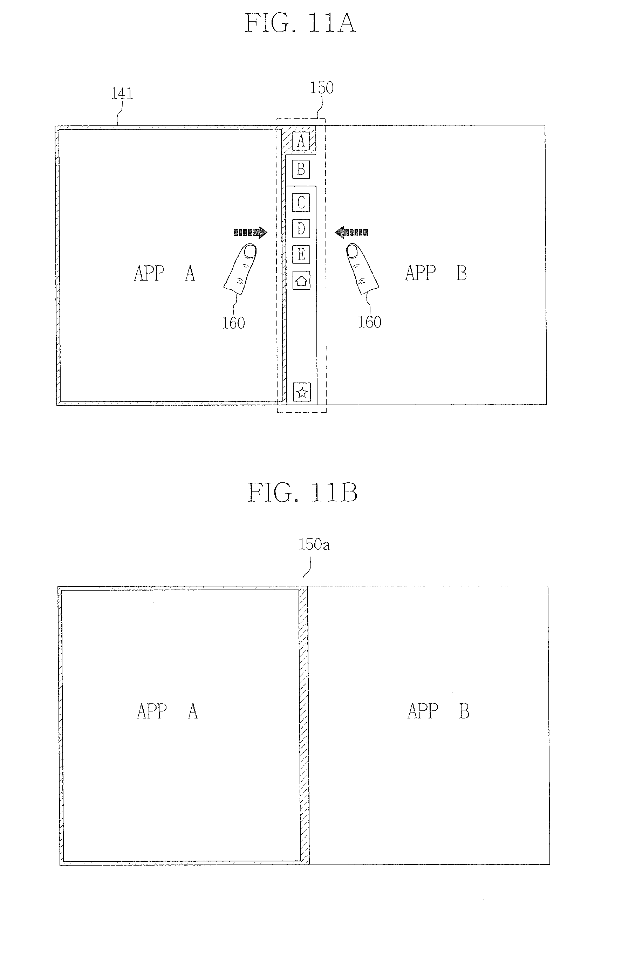

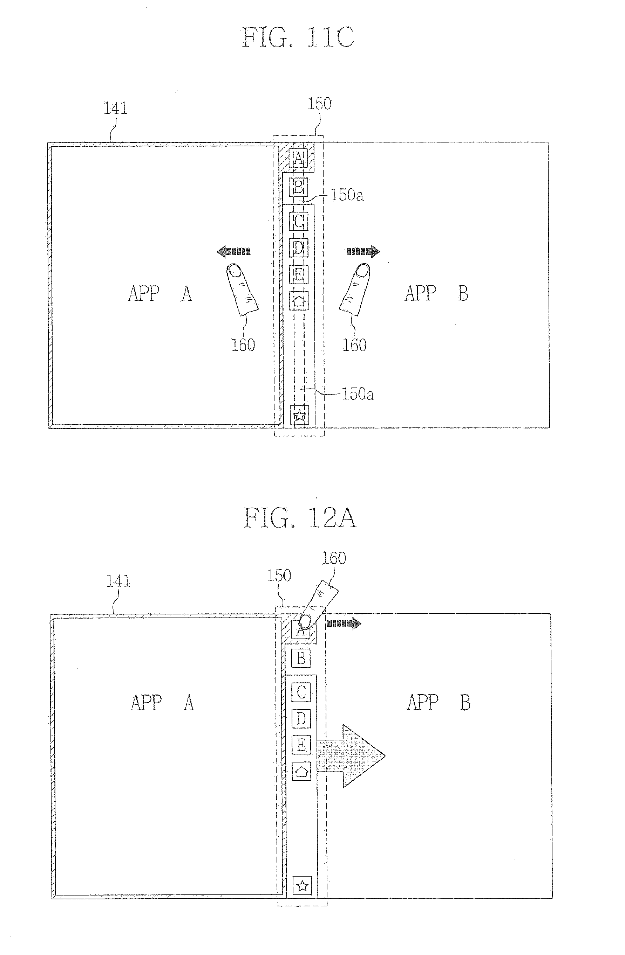

Hereinafter, an operation of hiding the multi-tasking bar 150 and displaying the multi-tasking bar 140 again will be described in detail with reference to FIG. 11A, FIG. 11B, and FIG. 11C.

The operation of hiding the multi-tasking bar 150 may be performed through the user input dragged in a direction from both side faces to the center of the multi-tasking bar 150 (e.g., a pinch input to squeeze the multi-tasking bar 150) as shown in FIG. 11A. The user input may be performed in a form in which the user touches arbitrary points on both sides of the multi-tasking bar 150 and squeezes the multi-tasking bar 150 with two fingers 160.

In response to the user input for hiding the multi-tasking bar 150, the multi-tasking bar 150 is hidden as shown in FIG. 11B, and the active area 142 and the inactive area 143 may be divided by a line 150a thinner than the multi-tasking bar 150. Accordingly, the application display area which can be viewed by the user is further broadened.

As shown in FIG. 11C, in order to re-display the multi-tasking bar 150, the user may generate a spreading touch input in the opposite direction to the pinching input direction of FIG. 11A, and thus the hidden multi-tasking bar 150 may be displayed again.

Hereinafter, an operation of activating the selected area on the full screen 141 will be described in detail with reference to FIG. 12A through FIG. 12E.

The user input for displaying a selected window in the full screen 141 may be implemented in a form of dragging and dropping one icon selected in the first task area in the left or right direction of the screen. In this case, the application to be displayed on the full screen 141 is determined according to the direction of the dragging. If the dropped icon is positioned in the left area or the right area over the center area of the screen 141, the mode is changed to the full screen 141 mode.

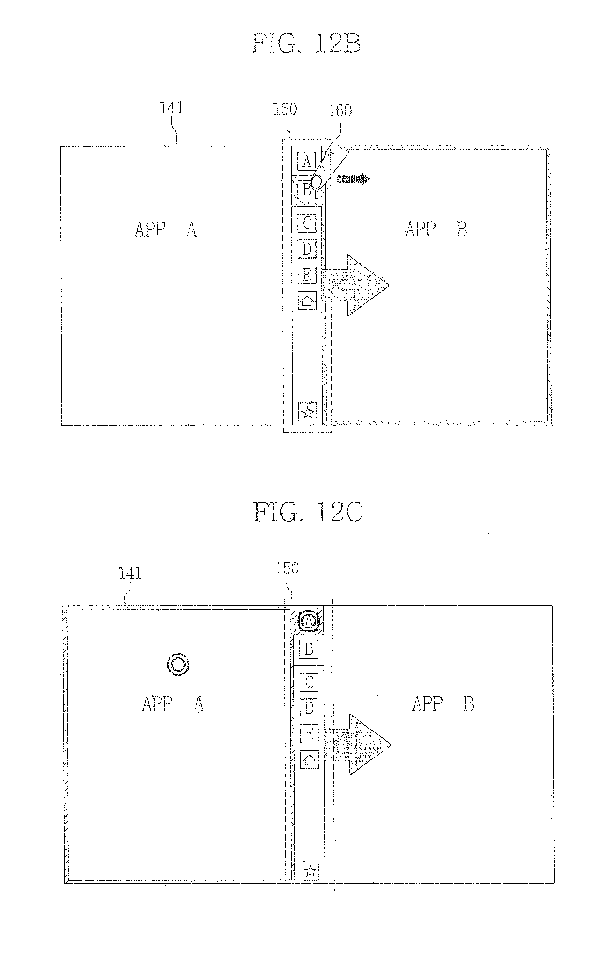

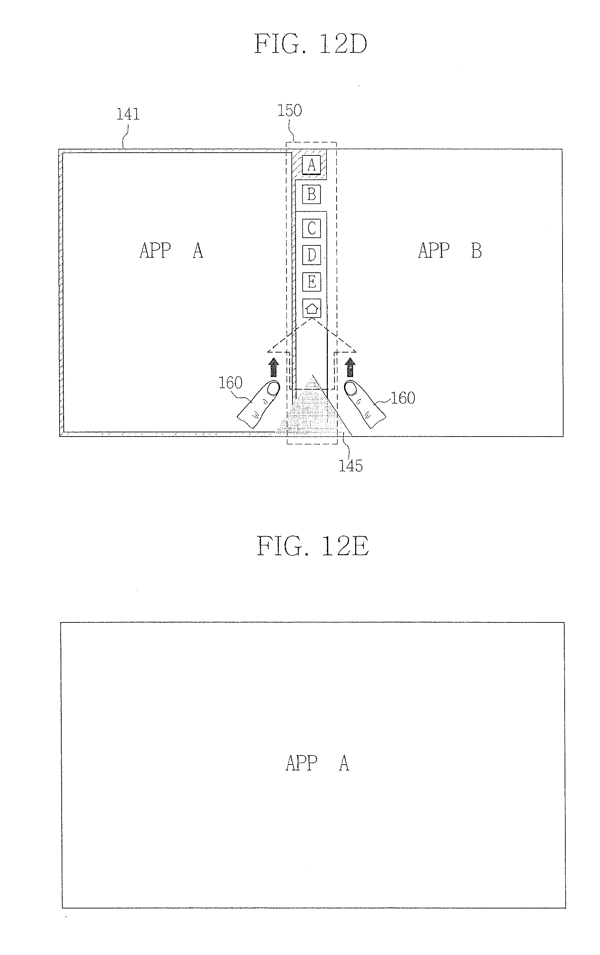

For example, in FIG. 12A, if the icon of the application A is dragged and dropped to the right side, the left screen and the right screen of the display screen 141 correspond to the application A and the application A is displayed on the full screen 141 as shown in FIG. 12E. Further, as shown in FIG. 12B, if the icon of the application B is dragged to the right side in which the application B is displayed, the size of the window for displaying the application B is reduced or the application A is displayed on the full screen 141 as shown in FIG. 12E. That is, the window for application A displayed in the left area is further broadened due to the dragging and the application A is displayed on the full screen 141. Further, the mode may be changed into the full screen 141 mode if the icon of the application A dropped to the right side in FIG. 12A corresponding to the right area illustrated in FIG. 5B. If the icon of the application A is dropped in the right side in FIG. 12A corresponding to the center area 141b illustrated in FIG. 5B, the multi-tasking bar 150 may be relocated on the location in which the icon of the application A is dropped.

In addition, the user input for displaying the full screen 141 may be a form of double tapping as shown in FIG. 12C. In this case, the double tapped application is displayed on the full screen 141. For example, if the icon of the application A or the execution area of the application A is double tapped by e.g., a finger 160, the application A may be displayed on the full screen 141.

In addition, the user input for displaying the full screen 141 may be a form of dragging at least one finger 160 from the lower end to the upper end of the screen 141 as shown in FIG. 12D. In this case, the application in the active state, e.g., the application A in the active area 142, may be displayed on the full screen 141. For example, if two fingers 160 are dragged in the upper end direction from the lower end of the screen corresponding to the position where the multi-tasking bar 150 is displayed, the application A may be displayed on the full screen 141 while a predetermined indicator 145 is displayed.

Meanwhile, the user input for displaying the full screen 141 is not limited to the examples described above, and may be implemented in various forms. For example, if the user touches the multi-tasking bar during a predetermined time or longer, switching the active area or the inactive area to the full screen may be performed. In addition, if the user double taps one area of the multi-tasking bar or drags the multi-tasking bar in a desired direction, displaying the active area or the inactive area on the full screen may be performed.

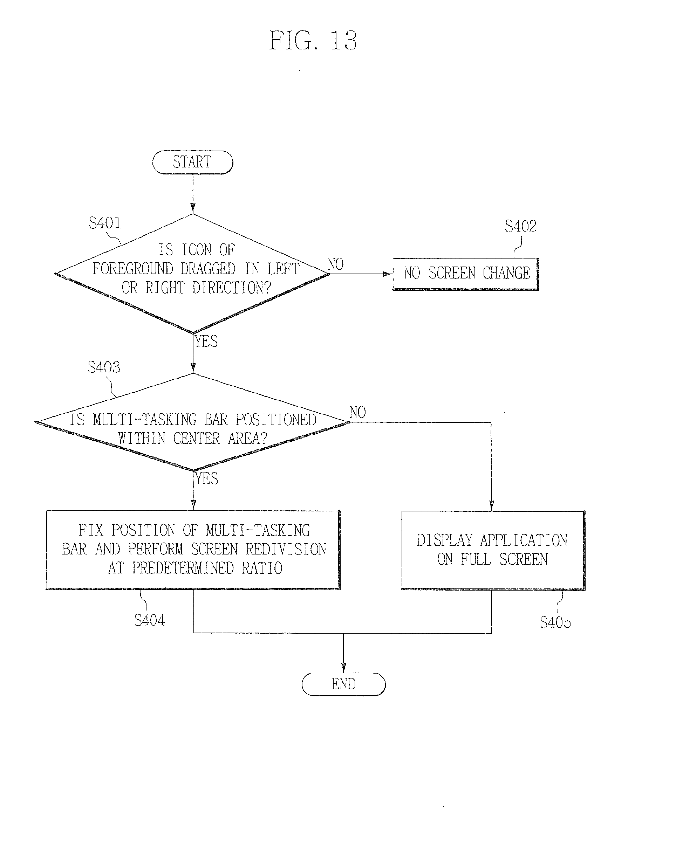

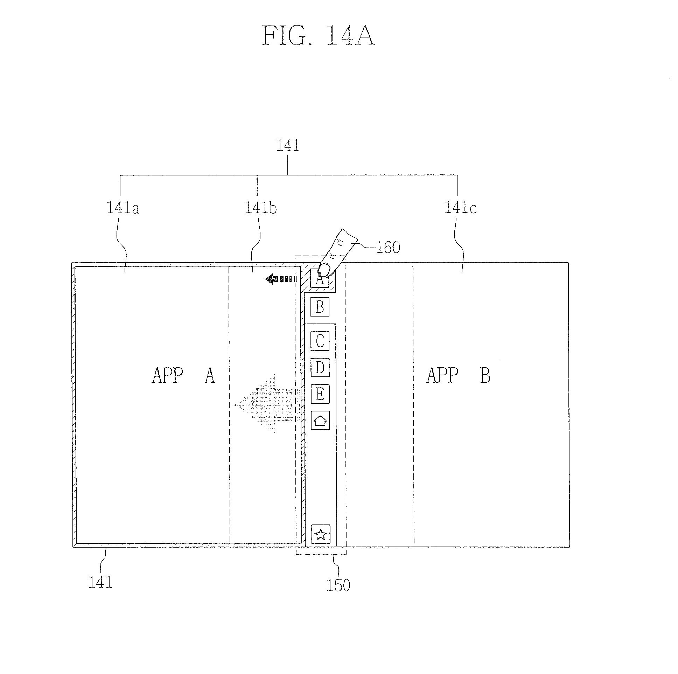

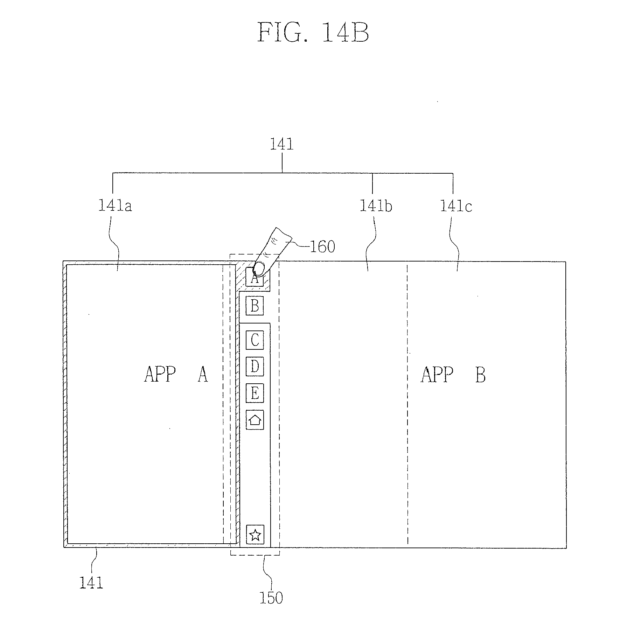

Hereinafter, an operation of adjusting the position of the multi-tasking bar 150 to adjust the screen division ratio will be described in detail with reference to FIG. 13, FIG. 14A, and FIG. 14B.

Referring to FIG. 13, it is determined whether a user input of dragging the icon of the application executed on the foreground in the direction of the left side or the right side is recognized in operation S401.

If no user input is recognized, the screen 141 may be maintained in operation S402.

If the user input is recognized, the multi-tasking bar 150 is moved according to the direction and movement of the user input, and it is determined whether the final position of the multi-tasking bar 150 is disposed within the center area 141b (See FIG. 14A) in operation S403. For example, as shown in FIG. 14A, according to the dragging of the icon of the application A to the left side, the multi-tasking bar 150 is moved to the left side. In this case, it is determined whether the position where the user drops the multi-tasking bar 150 is within the center area 141b of the screen 141.

If the multi-tasking bar 150 is disposed outside the center area 141b of the screen 141, the user input is recognized as the user input for displaying the full screen 141 as described above, and the application corresponding to the user input is displayed on the full screen 141 in operation S405.

If the multi-tasking bar 150 is disposed within the center area 141b of the screen 141, the position of the dropped multi-tasking bar 150 may be determined when the touch input is released, and the screen 141 is divided at a ratio according to the position of the multi-tasking bar 150 in operation S404. For example, as shown in FIG. 14B, if the multi-tasking bar 150 is disposed within the center area 141b of the screen 141, the position of the multi-tasking bar 150 may be determined when the touch input 160 is released. In this case, the width of the screen window of the application A is set to be narrower than the width of the screen window of the application B.

The user can view the enlarged and desired application through the illustrated interface, and thus the illustrated embodiments of the invention may provide the interface which makes the user selectively adjust the application area with simple manipulation.

In addition, the method of providing the user interface may include an operation of deleting the icon displayed in the multi-tasking bar. The deleting operation may be formed in a manner of deleting the touched icon from the multi-tasking bar when the user continuously touches the icon to be deleted during a preset time or longer.

In the exemplary embodiments of the present disclosure described above, the user interface provides various functions in the multi-tasking environment, and thus it is possible to provide more user-friendly user interface in a multi-tasking environment.

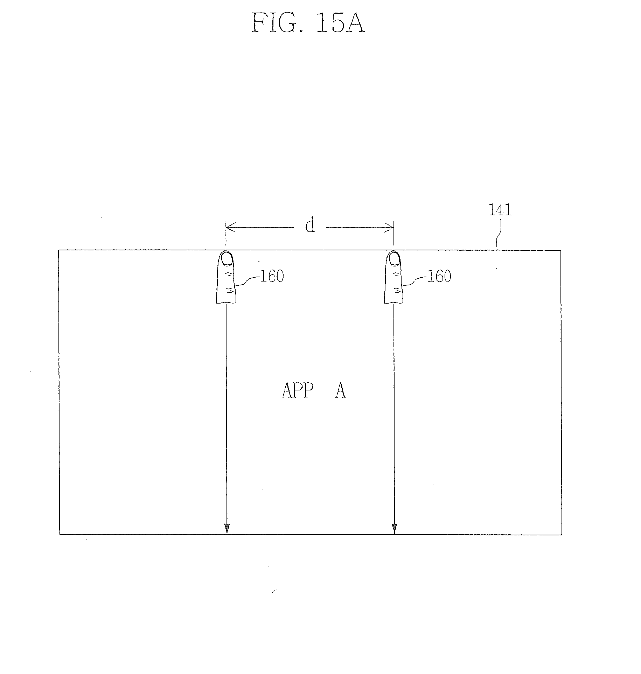

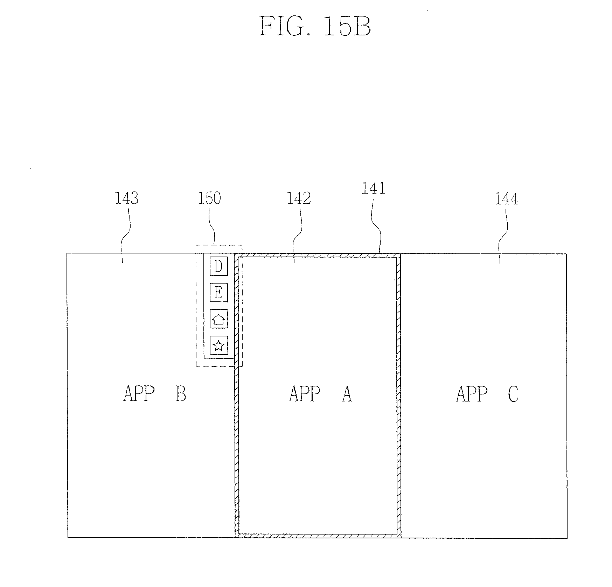

FIG. 15A and FIG. 15B are diagrams illustrating a user interface for displaying a multi-tasking bar according to an exemplary embodiment of the present invention.

Referring to FIG. 15A, the screen 141 may be divided into three or more areas in response to a touch input. For example, if a multi-touch drag input is received on a touch screen, the input sensing unit 110 may determine whether the distance between two touch points is greater than or equal to a predetermined distance 'd'. If the distance between two touch points is determined to be greater than or equal to the predetermined distance 'd' and the dragged trace of the multi-touch drag input is substantially parallel to left and right edges of the screen, two or more boundaries may be generated to divide areas in the touch screen as shown in FIGS. 15A and 15B. As shown in FIG. 15A, application A is executed and displayed on the screen 141. The distance between the two-touch points 160 corresponds to the predetermined distance 'd', and a multi-touch drag input may be recognized by the input sensing unit 110 and the screen areas may be divided into three areas.

Referring to FIG. 15B, the foreground application A may be displayed within the center area 142 of the screen 141. An active area indicator, e.g., a bold frame, may indicate the center area 142 is the current active area. The areas 143 and 144 may be inactive areas and two most recently executed background applications may be displayed within the side areas 143 and 144. However, aspects are not limited as such. For example, different states of the application A or a home screen may be displayed within the inactive areas 143 and 144. A multi-tasking bar 150 may be displayed between the active area 142 and the inactive area 143 or between the active area 142 and the inactive area 144. Further, the multi-tasking bar may include icons corresponding to background applications, a home screen icon, or an icon for displaying a book mark menu. The vertical length of the multi-tasking bar 150 may be extendable according to the number of icons included in the multi-tasking bar 150. The multi-tasking bar 150 may be located within an inactive area, e.g., the inactive area 143, as shown in FIG. 15B. If the inactive area 143 is changed into an active area in response to a selection input, the multi-tasking bar 150 may be relocated within the area 142 that is changed into an inactive area when the area 143 is changed into an active area.

The size of the active area 142 may be larger than inactive areas 143 and 144. For example, the width of the active area may be 40% of the screen width and the widths of the inactive areas may be 30% of the screen width. Further, the location of the multi-tasking bar 150 and the boundaries may be relocated in response to a change of an active area. For example, if the inactive area 143 is changed into an active area, the width of the area 143 may increase and the multi-tasking bar 150 and the corresponding boundary may be relocated such that the width of the area 143 corresponds to e.g., 40% of the screen width while the widths of the areas 142 and 144 are resized as 30% of the screen width. Referring to FIG. 2, the active area 142 may be wider than the inactive area 143. If the inactive area 143 is switched into an active area, the multi-tasking bar 150 may be relocated such that the area 143 is wider than the area 142, which is switched into an inactive area.

Further, in an exemplary embodiment, if the left area 143 or the right area 144 is selected as an active area, the application window displayed in the left area 143 or the right area 144 may be switched with the application window displayed within the center area 142 such that the currently active application window may be displayed within the center area 142. In this scheme, the center area 142 is dedicated for an active application window.

Ifthe multi-tasking bar 150 is not displayed on the screen 141, device state information may be displayed on one edge of the screen 141, e.g., the top edge of the screen 141. The device state information may include at least one of remaining battery information, antenna information, alarm information, current time/date information, Wi-Fi signal information, registered schedule information, received email information, and application notification information. Each item of the device state information may be displayed as an icon. The antenna information and the Wi-Fi signal information may indicate received signal strengths of wireless mobile communication signal and Wi-Fi signal strength, respectively. The received email information may indicate the number of received new emails. The application notification information may indicate various kinds of application state information, e.g., update state information of an application, an application download status, and the like. If the multi-tasking bar 150 is displayed on the screen 141 in response to an input, a portion of or all the device state information may be relocated into the multi-tasking bar 150. If the multi-tasking bar 150 disappears from the screen 141, the device state information may be relocated back to the previous location.

Aspects of the present invention may be implemented in a form of program instructions capable of being performed through various computer components to be recordable in a computer-readable recording medium ("a non-transitory recording medium"), such as a computer program product configured for execution of the instructions, and a storage of a web server configured for transmission of the program/application including the instructions. The computer-readable recording medium may include program instructions, data files, data structures, and the like or the combinations thereof. The program instructions recorded in the computer-readable recording media may be designed and constituted especially for implementing the present invention, or the type of the program instructions may be known to those skilled in a field of computer software. The computer-readable recording medium may be a magnetic medium, such as a hard disk, a floppy disk, and a magnetic tape; an optical recording medium such as a CD-ROM, a DVD, etc.; a magneto-optical medium such as a floptical disk; and a hardware device specially configured to store and perform program instructions, such as a ROM, a RAM, a flash memory, or the like. The type of the program instructions may be machine language codes that may be compiled by compilers as well as higher-level language codes capable of being executed by computers using interpreters or the like. The hardware device may be configured to be operated as one or more software modules in order to perform the process according to the present invention, and vice versa. In addition, the computer readable recording medium may be dispersed in a computer system connected through a network, and codes readable by a computer in a dispersion manner may be stored and executed.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A method for providing a user interface, the method includes displaying a foreground application window on a touch screen of a mobile communication device, detecting an input pattern for displaying a multi-tasking bar, displaying the multi-tasking bar on the touch screen in response to detecting the input pattern for displaying the multi-tasking bar, the multi-tasking bar configured to divide the touch screen into at least two areas, and resizing the foreground application window within a first area of the at least two areas.

## Claims

1. A method for providing a user interface, the method comprising:
- displaying a foreground application window on a touch screen of a mobile communication device;
- detecting, using a processor, an input pattern for displaying a multi-tasking bar;
- displaying the multi-tasking bar on the touch screen in response to detecting the input pattern for displaying the multi-tasking bar, the multi-tasking bar configured to divide the touch screen into at least two areas; and
- resizing the foreground application window within a first area of the at least two areas.

2. A non-transitory computer readable storage medium storing one or more programs for instructing a computer, when executed by a processor, to perform:
- displaying a foreground application window on a touch screen of a mobile communication device;
- detecting an input pattern for displaying a multi-tasking bar;
- displaying the multi-tasking bar on the touch screen in response to detecting the input pattern for displaying the multi-tasking bar, the multi-tasking bar configured to divide the touch screen into at least two areas; and
- resizing the first foreground application window within a first area of the at least two areas.

3. The method of claim 1 or the non-transitory computer readable storage medium of claim 2, wherein the multi-tasking bar comprises an icon corresponding to an application stored in the mobile communication device or in the computer.

4. The method or the non-transitory computer readable storage medium of claims 3, wherein the icon is associated with a foreground application or a background application.

5. The method or the non-transitory computer readable storage medium of claim 3, further comprising:
if the icon is tapped or dragged into a second area of the at least two areas, displaying the application stored in the mobile communication device or in the computer in the second area,
wherein the multi-tasking bar is disposed between the first area and the second area.

6. The method or the non-transitory computer readable storage medium of one of claims 1 to 5, wherein the multi-tasking bar comprises:
a first task area to display one or more foreground application icons or
to display an icon for displaying a bookmark menu associated with applications registered by a user; and
a second task area to display one or more background application icons.

7. The method or the non-transitory computer readable storage medium of one of claims 1 to 6, wherein the multi-tasking bar comprises device state information, the device state information comprising at least one of remaining battery information, antenna information, alarm information, current time/date information, Wi-Fi signal information, registered schedule information, received email information, and application notification information, and
wherein the device state information is relocated into the multi-tasking bar from another location of the touch screen if the multi-tasking bar is displayed on the touch screen.

8. The method or the non-transitory computer readable storage medium of one of claims 1 to 7, further comprising:
- relocating the multi-tasking bar within a center region of the touch screen if an input pattern for relocating the multi-tasking bar is recognized.

9. The method or the non-transitory computer readable storage medium of one of claims 1 to 8, further comprising:
- switching the multi-tasking bar into a boundary thinner than the multi-tasking bar in response to an input pattern for hiding the multi-tasking bar; and
- switching the boundary into the multi-tasking bar in response to an input pattern for exposing the multi-tasking bar.

10. The method or the non-transitory computer readable storage medium of one of claims 1 to 9, further comprising receiving a multi-touch drag input for displaying the multi-tasking bar and dividing the touch screen into an active area and an inactive area, the multi-tasking bar being disposed between the active area and the inactive area;
wherein preferably a background application is assigned to the inactive area.

11. A mobile communication device to provide a user interface, the mobile communication device comprising:
a processor configured to recognize an input pattern for displaying a multi-tasking bar from a touch input; and
a touch screen display to receive the touch input, to display the multi-tasking bar on a touch screen of the mobile communication device in response to recognizing the input pattern for displaying the multi-tasking bar, the multi-tasking bar configured to divide the touch screen into at least two areas, and to display a foreground application window on a first area of the at least two areas.

12. The mobile communication device of claim 11, wherein the mobile communication device, in particular its processor with the touch screen, is/are adapted to provide the user interface according to the method of one of claims 1 to 10.

13. The mobile communication device of claim 11 or 12,
wherein the multi-tasking bar comprises an icon corresponding to an application stored in the mobile communication device, wherein the icon preferably is associated with a first foreground application or a first background application;
or/and
wherein the multi-tasking bar comprises:
a first task area to display one or more foreground application icons or
to display an icon for displaying a bookmark menu associated with applications registered by a user; and
a second task area to display one or more background application icons;
or/and
wherein the processor is configured to relocate the multi-tasking bar within a center region of the touch screen if an input pattern for relocating the multi-tasking bar is recognized.

14. The mobile communication device of one of claims 11 to 13, further comprising:
switching the multi-tasking bar into a boundary thinner than the multi-tasking bar in response to an input pattern for hiding the multi-tasking bar; and
switching the boundary into the multi-tasking bar in response to an input pattern for exposing the multi-tasking bar;
or/and
further comprising:
if the icon is tapped or dragged into a second area of the at least two areas, the touch screen display displays the application stored in the mobile communication device in the second area,
wherein the multi-tasking bar is disposed between the first area and the second area.

15. The mobile communication device of one of claims 11 to 14,
wherein the touch input corresponds to a multi-touch drag input for displaying the multi-tasking bar and dividing the touch screen into an active area and an inactive area, the multi-tasking bar being disposed between the active area and the inactive area, wherein preferably a background application is assigned to the inactive area;
or/and
wherein the multi-tasking bar comprises device state information, the device state information comprising at least one of remaining battery information, antenna information, alarm information, current time/date information, Wi-Fi signal information, registered schedule information, received email information, and application notification information, and wherein the device state information is relocated into the multi-tasking bar from another location of the touch screen if the multi-tasking bar is displayed on the touch screen.
